(19) Europäisches Patentamt
European Patent Office
Office européen des brevets

(11) **EP 4 097 410 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **21703842.1**

(22) Anmeldetag: **27.01.2021**

(51) Internationale Patentklassifikation (IPC):
**F27D 5/00** (2006.01)

(52) Gemeinsame Patentklassifikation (CPC):
**F27D 5/0006; F27D 5/0068;** Y02E 60/10

(86) Internationale Anmeldenummer:
**PCT/EP2021/051810**

(87) Internationale Veröffentlichungsnummer:
**WO 2021/151917 (05.08.2021 Gazette 2021/31)**

(54) **TRANSPORTWANNE ZUM TRANSPORTIEREN UND ERHITZEN CHEMISCHER SUBSTANZEN**

TRANSPORTATION TRAY FOR TRANSPORTING AND HEATING CHEMICAL SUBSTANCES

CUVE DE TRANSPORT PERMETTANT DE TRANSPORTER ET DE CHAUFFER DES SUBSTANCES CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2020 DE 102020000510**

(43) Veröffentlichungstag der Anmeldung:
**07.12.2022 Patentblatt 2022/49**

(73) Patentinhaber: **Saint-Gobain IndustrieKeramik Rödental GmbH**
**96472 Rödental (DE)**

(72) Erfinder: **DORST, Hans-Ulrich**
**96472 Rödental (DE)**

(74) Vertreter: **Gebauer, Dieter Edmund**
**Splanemann Patentanwälte mbB**
**Rumfordstraße 7**
**80469 München (DE)**

(56) Entgegenhaltungen:
WO-A1-2012/133525    CN-A- 107 883 774
DE-A1- 102005 024 957    DE-A1- 102011 052 016
US-A- 2 297 286    US-A1- 2019 218 150

**Beschreibung**

Die vorliegende Erfindung liegt auf dem technischen Gebiet der thermischen Umsetzung chemischer Substanzen in einem Ofen und betrifft eine Transportwanne, die zum Transportieren und Erhitzen chemischer Substanzen geeignet und bestimmt ist. Ferner betrifft die Erfindung die Verwendung einer erfindungsgemäßen Transportwanne bei der Herstellung von Kathodenmaterialien für Lithium-Ionen-Batterien.

Batterien werden grundsätzlich in primäre und sekundäre Energiespeicher unterschieden. Während bei primären Energiespeichern die chemische Energie irreversibel in elektrische Energie umgewandelt wird, ermöglichen sekundäre Energiespeicher (Akkumulatoren) eine Mehrfachnutzung durch die Möglichkeit, die ablaufende chemische Reaktion durch Zufuhr von elektrischer Energie umzukehren. Sekundäre Energiespeicher mit einem aktiven Kathodenmaterial auf Lithium-Ionen-Basis werden in verschiedensten Anwendungsfeldern eingesetzt. Beispiele hierfür sind Elektro- und Hybridfahrzeuge, tragbare Computer, Mobiltelefone und Smart Watches. Durch die breite Verwendung von Lithium-Ionen-Batterien werden aktive Kathodenmaterialien in großer Menge benötigt. Die erzeugten Mengen betragen weltweit mehr als 100000 Tonnen pro Jahr, mit stark steigender Tendenz. Derzeit ist es gängig, als aktives Kathodenmaterial Lithium-Mischmetalloxide mit den Übergangsmetallen Nickel (Nickel), Mangan (Mn) und Cobalt (Co) einzusetzen. Die am meisten produzierten Kathodenmaterialien sind Lithiumnickelcobaltmanganoxid ($LiNiCoMnO_2$) und Lithiumcobaltoxid ($LiCoO_2$); in weniger großen Mengen werden Lithiumnickelcobaltaluminiumoxid ($LiNiCoAlO_2$) und Lithiumeisenphosphat ($LiFePo_4$) produziert.

Bei der großtechnischen Herstellung von Kathodenmaterialien für Lithium-Ionen-Batterien werden die jeweiligen Ausgangsstoffe in einer Transportwanne durch einen Durchlaufofen transportiert und hierbei auf eine Temperatur von mehrere Hundert Grad Celsius (z.B. 950 °C) erhitzt, wodurch eine chemische Umsetzung zum gewünschten Produkt erfolgt. Die Materialien der derzeit eingesetzten Transportwannen sind im Hinblick auf die für die Verwendung erforderliche hohe Temperaturwechselbeständigkeit gewählt.

Nun hat sich aber in der Praxis gezeigt, dass diese Materialien einer erheblichen Korrosion unterliegen. Ursache hierfür ist die chemische Aggressivität der in der Transportwanne transportierten Substanzen, welche bei den hohen Temperaturen das Material der Transportwannen verstärkt angreifen. Vor allem bei der Herstellung von Lithiumnickelcobaltmanganoxid tritt wegen der besonders aggressiven Übergangsmetalle eine sehr starke Korrosion der Transportwannen auf. Dies hat in nachteiliger Weise zur Folge, dass die Transportwannen nur eine relativ geringe Anzahl von Brennzyklen erlauben und anschließend ersetzt werden müssen. Beispielsweise kann eine Transportwanne bei der Herstellung von Lithiumnickelcobaltmanganoxid meist nur für 20 bis 40 Brennzyklen eingesetzt werden. Erschwerend kommt hinzu, dass die Transportwannen nach dem Gebrauch Rückstände des Kathodenpulvers aufweisen, die in aller Regel als Sondermüll einzustufen sind, so dass eine aufwändige und teure Entsorgung der Transportwannen erforderlich ist. Dies führt zu erheblichen Mehrkosten und ist in ökologischer Hinsicht unerwünscht. Zudem kontaminieren Materialien der Transportwanne das Brenngut, was zu dessen Verunreinigung führt und insgesamt die Qualität vermindert.

In der DE 10 2005 024 957 A 1 ist ein mehrteiliger, dünnwandiger Tiegel mit einer Einlage aus Quarzglasgewebe oder Quarzglasfilz zum Abkühlen von Si-Schmelzen offenbart.

Die EP 0 452 718 B1 offenbart Glühbehälter für die Wärmebehandlung von darin angeordnetem Füllgut mit Boden und Seitenwänden aus mit Kohlenstofffasern verstärktem Kohlenstoff.

DE 10 2011 052 016 A 1 offenbart einen Bausatz für einen Schmelztiegel zur Aufnahme von geschmolzenem Material, beispielsweise geschmolzenem Silizium.

Träger für einem Wärmebehandlungsprozess zu unterziehende Bauteile sind in der WO 2004/111562 A2 beschrieben.

CN 107 883 774 A offenbart eine Transportwanne mit einer äußerem Stützgerüst und einem darin eingesetzten starren Rahmen.

Weiterer Stand der Technik kann WO 2012133525 A1 und US 2019/218150 A1 entnommen werden.

Die Aufgabe der vorliegenden Erfindung besteht darin, im Stand der Technik bekannte Transportwannen so zu verbessern, dass die Transportwannen eine hohe Temperaturwechselbeständigkeit bei gleichzeitig guter Korrosionsbeständigkeit aufweisen und somit häufiger eingesetzt werden können als im Stand der Technik bekannte Transportwannen.

Diese und weitere Aufgaben werden nach dem Vorschlag der Erfindung durch eine Transportwanne für einen Ofen, insbesondere einen Durchlaufofen oder Herdwagenofen, gemäß den Merkmalen des unabhängigen Patentanspruchs gelöst. Vorteilhafte Ausgestaltungen der Erfindung sind durch die Merkmale der Unteransprüche angegeben.

Erfindungsgemäß ist eine Transportwanne für einen Ofen, insbesondere einen Durchlaufofen oder Herdwagenofen, gezeigt. Die Transportwanne dient als wannenförmiger Behälter zum Transportieren von chemischen Substanzen, wobei die in der Transportwanne transportierten Substanzen (Ausgangsstoffe) durch Erhitzen im Ofen in der Transportwanne zu einem chemischen Produkt umgesetzt werden sollen. Grundsätzlich können beliebige Ausgangsstoffe in der erfindungsgemäßen Transportwanne zu einem chemischen Produkt umgesetzt werden. Besonders vorteilhaft handelt es sich um Ausgangsstoffe zur Herstellung eines aktiven Kathodenmaterials einer Lithium-Ionen-Batterie, welches insbesondere ein Lithium-Mischmetalloxid mit den Übergangsmetallen Nickel (Nickel), Mangan (Mn) und Cobalt (Co) ist, beschrieben durch die allgemeine Formel $LiNi_xMn_yCo_zO_2$ mit $x+y+z = 1$. In vorstehender Formel können Nickel, Mangan und Cobalt jeweils allein oder in einer beliebigen Kombination vorhanden sein.

Die erfindungsgemäße Transportwanne zum Transportieren und Erhitzen chemischer Substanzen umfasst eine Stützstruktur mit einem vorzugsweise ebenen Boden und einem damit fest verbundenen Rahmen. Erfindungsgemäß sind Boden und Rahmen der Stützstruktur einteilig bzw. einstückig ausgebildet und können nicht zerstörungsfrei lösbar voneinander getrennt werden.

Die Transportwanne umfasst weiterhin eine aus mehreren Bestandteilen zusammengesetzte Auskleidung (Wandung bzw. Umgrenzung) eines wannenförmigen Hohlraums, der zur Aufnahme der chemischen Substanzen dient. Die Auskleidung wird von der Stützstruktur gestützt. Die Auskleidung umfasst eine dem Boden aufgelegte Bodenplatte und mehrere am Rahmen festgelegte (d.h. am Rahmen fixierte) Rahmenplatten. Vorzugsweise werden die Rahmenplatten gegen den Rahmen geklemmt.

Hierbei wird die Bodenplatte so von der Stützstruktur gestützt, dass sie, bezogen auf die Plattenebene der Bodenplatte, zumindest in zwei orthogonalen Richtungen freien Raum (Freiraum) hat, so dass deren thermische Ausdehnung nicht behindert ist. Mit anderen Worten, die Bodenplatte ist so von der Stützstruktur gestützt, dass deren thermische Ausdehnung in der Plattenebene nicht behindert ist. Die Bodenplatte wird vom Boden der Stützstruktur gestützt. Vorzugsweise hat die Bodenplatte in der Plattenebene vollumfänglich freien Raum. Die Bodenplatte wird zu diesem Zweck so von der Stützstruktur gestützt, dass sie ausreichend Spiel (d.h. Freiraum) in der Plattenebene hat, so dass deren thermische Ausdehnung nicht behindert ist.

Zudem ist jede Rahmenplatte so am Rahmen fixiert, vorzugsweise gegen den Rahmen geklemmt, dass sie in der Plattenebene zumindest in zwei orthogonalen Richtungen freien Raum (Freiraum) hat, so dass auch deren thermische Ausdehnung nicht behindert ist. Mit anderen Worten, jede Rahmenplatte wird so von der Stützstruktur gestützt, dass deren thermische Ausdehnung in der Plattenebene nicht behindert ist. Vorteilhaft wird jede Rahmenplatte gegen den Rahmen geklemmt. Jede Rahmenplatte wird zu diesem Zweck so von der Stützstruktur gestützt, dass sie ausreichend Spiel (d.h. Freiraum) in der Plattenebene hat, so dass deren thermische Ausdehnung nicht behindert ist.

Durch die spezielle Gestaltung der Auskleidung des wannenförmigen Hohlraums der Transportwanne, bei welcher die thermischen Ausdehnungen von Boden- und Rahmenplatten nicht beeinträchtigt sind, können thermisch bedingte mechanische Spannungen vermieden werden, die ansonsten einen Materialbruch wahrscheinlich machen. Die Auskleidung kann somit aus einem Material bestehen, das eine gute Korrosionsbeständigkeit aufweist, ohne dass die Gefahr eines Materialbruchs aufgrund der bei diesen Materialien typischerweise eher geringen Temperaturwechselbeständigkeit besteht. Materialien mit einer geringen Temperaturwechselbeständigkeit können bei thermisch bedingten mechanischen Spannungen leichter brechen. Das Material der Stützstruktur hingegen, welches durch die Auskleidung vor Korrosion geschützt ist, kann im Hinblick auf die gewünscht hohe Temperaturwechselbeständigkeit gewählt werden. Die erfindungsgemäße Transportwanne kann somit in vorteilhafter Weise weitaus häufiger als herkömmliche Transportwannen verwendet werden, bevor sie ersetzt werden muss. Beispielsweise können erfindungsgemäße Transportwannen bei einer selben Verwendung mindestens 100 mal so oft eingesetzt werden wie herkömmliche Transportwannen.

Die für die Auskleidung eingesetzten Materialien können so gewählt werden, dass sie in hohem Maße korrosionsbeständig sind. Durch die strukturelle Gestaltung der Auskleidung wird die Temperaturwechselbeständigkeit erreicht.

Im Hinblick auf die Temperaturwechselbeständigkeit ist eine geringe Wandstärke der Auskleidung vorteilhaft. Vorzugsweise liegt die Wandstärke von Boden- und Rahmenplatten im Bereich von 1,5 mm bis 8,0 mm, besonders bevorzugt im Bereich von 2,0 mm bis 5,0 mm. Insbesondere können die Rahmenplatten auch als Folie mit einer Wandstärke im Bereich von 0,3 mm bis 2,5 mm ausgebildet werden. Die Dicke der Stützstruktur liegt vorteilhaft im Bereich von 6 bis 12 mm und beträgt vorzugsweise 7 mm.

Durch die nachfolgende Formel werden die Zusammenhänge verdeutlicht:

$$I\,(TWB) = (MOR \times TC) : (MOE \times CTE \times T)$$

worin die Abkürzungen folgende Bedeutung haben
I(TWB): Indikator für Temperaturwechselbeständigkeit
MOR: Modulus of Rupture (Biegefestigkeit), Einheit: $N/mm^2$
TC: Thermal Conductivity (Wärmeleitfähigkeit), Einheit: W/m*K
MOE: Young Modulus (E-Modul), Einheit: $N/mm^2$
CTE: Coefficient of Thermal Expansion (Wärmeausdehnungskoeffizient), Einheit: 1/K
T: Plate Thickness (Plattendicke), Einheit: m

In vorstehender Formel ist I(TWB) ein Indikator für die Temperaturwechselbeständigkeit eines Materials. Je größer der Wert I(TWB) ist, desto besser ist die Temperaturwechselbeständigkeit, und umgekehrt. Demnach ist die Temperaturwechselbeständigkeit insbesondere umgekehrt proportional zur Plattendicke T, d.h. je geringer die Plattendicke T, desto größer ist die Temperaturwechselbeständigkeit.

Die Auskleidung des wannenförmigen Hohlraums oder Teile hiervon können separat ausgetauscht werden, wobei die Stützstruktur in aller Regel weiter verwendbar ist. Die Kosten für die Herstellung von Substanzen bei Verwendung erfindungsgemäßer Transportwannen können somit erheblich reduziert werden. Zudem fällt deutlich weniger Sondermüll zur Entsorgung an. Weiterhin vermindert sich die Verunreinigung des Brennguts, so dass dessen Qualität verbessert ist.

Die Bodenplatte der Auskleidung kann ein- oder mehrteilig ausgebildet sein. Bevorzugt ist die Bodenplatte einteilig ausgebildet ist. Bei einer mehrteiligen Ausbildung der Bodenplatte ist diese beispielsweise aus mehreren Streifen zusammengesetzt. Gleichermaßen kann jede Rahmenplatte ein- oder mehrteilig ausgebildet sein, wobei eine einteilige Ausgestaltung bevorzugt ist.

Die Transportwanne ist vorteilhaft so ausgebildet, dass keine Teile in den wannenförmigen Hohlraum ragen, welche nicht Teil der Auskleidung sind, insbesondere keine Schrauben, die zur Befestigung der Rahmenplatten dienen.

Gemäß der erfindungsgemäßen Transportwanne sind die Rahmenplatten durch Klemmleisten mit dem Rahmen der Stützstruktur verklemmt. Vorteilhaft werden zwei benachbarte Rahmenplatten durch eine Klemmleiste gegen den Rahmen geklemmt. Erfindungsgemäß weisen die Klemmleisten jeweils mindestens eine Nut zur Aufnahme eines Randbereichs einer angrenzenden Rahmenplatte auf, wobei der Randbereich mit Spiel in der Nut der Klemmleiste aufgenommen ist. Vorzugsweise weisen Klemmleisten jeweils Nuten zur Aufnahme von Randbereichen der Rahmenplatten auf. Hierbei sind die Randbereiche der an eine Klemmleiste angrenzenden Rahmenplatten mit Spiel in den Nuten der Klemmleisten aufgenommen, um eine thermische Ausdehnung der Rahmenplatten zu ermöglichen. Die Klemmleisten zum Klemmen der Rahmenplatten sind vorteilhaft durch Gewindeschrauben oder federelastische Klammern aus einem reaktionsträgen keramischen Material mit dem Rahmen verklemmt. Die hierbei eingesetzten Gewindeschrauben oder Klammern sind hitze- und korrosionsbeständig. Vorzugsweise bestehen die Gewindeschrauben und Klammern aus einem keramischen Material, wie Zirkonoxid, Magnesiumoxid, Aluminiumoxid oder Mischungen hieraus, wobei es bevorzugt ist, wenn dieses Material einen Anteil von mindestens 80% hat. Vorteilhaft sind die Klemmleisten jeweils mit einem Eckabschnitt des Rahmens verklemmt. Die Klemmleisten können auch als Eckteile bezeichnet werden.

Gemäß einer vorteilhaften Ausgestaltung der Transportwanne enthalten die Klemmleisten Aluminium/Magnesium-Spinell, Yttriumoxid ($Y_2O_3$), Ceroxid ($CeO_2$), Hafniumoxid, Aluminiumoxid ($Al_2O_3$), Zirkonoxid ($ZrO_2$), Magnesiumoxid (MgO), oder Mischungen hiervon, vorzugsweise zu mindestens 80%, besonders bevorzugt zu mindestens 90%. Insbesondere können die Klemmleisten aus Aluminiumoxid ($Al_2O_3$), Zirkonoxid ($ZrO_2$), Magnesiumoxid (MgO) oder Mischungen hiervon bestehen.

Gemäß einer weiteren vorteilhaften Ausgestaltung der erfindungsgemäßen Transportwanne ist der Rahmen der Stützstruktur ein geschlossener bzw. umlaufender Rahmen. Vorzugsweise weist der umlaufende Rahmen der Stützstruktur plattenförmige Rahmenabschnitte auf. Beispielsweise hat der Rahmen eine Rechteck- oder Quadratform mit jeweils zwei einander gegenüberliegenden (parallelen) Rahmenabschnitten. Beispielsweise sind einander angrenzende Rahmenabschnitte durch einen (schrägen) Eckabschnitt miteinander verbunden, wobei der Eckabschnitt zu jedem der beiden angrenzenden Rahmenabschnitte in einem Winkel von größer als 0° und kleiner als 90° angeordnet ist.

Vorzugsweise weist mindestens ein plattenförmiger Rahmenabschnitt des Rahmens der Stützstruktur mindestens eine Ausnehmung, insbesondere genau eine Ausnehmung, auf. Vorteilhaft weisen alle plattenförmigen Rahmenabschnitte jeweils mindestens eine Ausnehmung, insbesondere genau eine Ausnehmung, auf. Durch die mindestens eine Ausnehmung können Gewicht und Material, sowie Herstellungskosten für die Transportwanne eingespart werden. Vorteilhaft ist zudem ein hierdurch erzielter verbesserter Wärmeübergang zum Brenngut im Bereich der Ausnehmung, was den Nachteil der typischer Weise eher schlechteren Wärmeleitfähigkeit von gut korrosionsbeständigen Materialien vermindert. Zudem kann die thermische Belastung der Auskleidung vermindert werden.

Vorzugsweise erstreckt sich die mindestens eine Ausnehmung eines plattenförmigen Rahmenabschnitts der Stützstruktur über mindestens 50%, mindestens 60%, mindestens 70%, mindestens 80% oder mindestens 90% der Fläche des plattenförmigen Rahmenabschnitts des Rahmens, wobei mit einer zunehmend größeren Ausdehnung der Ausnehmung ein besserer Wärmeübergang und eine größere Ersparnis von Material und Kosten einhergehen.

Die mindestens eine Ausnehmung des plattenförmigen Rahmenabschnitts der Stützstruktur kann eine innenliegende Ausnehmung sein, d.h. sie ist vollumfänglich von Material des Rahmenabschnitts umgeben. In diesem Fall ist die zugehörige Rahmenplatte der Auskleidung weiterhin gut gegen mechanische Belastung durch den Rahmenabschnitt der Stützstruktur geschützt und kann deshalb extrem dünnwandig ausgeführt werden. Beispielsweise liegt die Wandstärke der Rahmenplatte im Bereich von 0,3 mm bis 8,0 mm. Bei einer besonders dünnwandigen Rahmenplatte liegt die Wandstärke beispielsweise im Bereich von 0,3 mm bis 2,0 mm.

In einer alternativen Ausgestaltung ist die mindestens eine Ausnehmung des plattenförmigen Rahmenabschnitts der Stützstruktur eine randständige Ausnehmung. Dies ermöglicht durch eine weitere Vergrößerung der Ausdehnung der Ausnehmung eine noch weitere Verbesserung des Wärmeübergangs zum Brenngut sowie eine weitere Ersparnis von Material und Kosten.

Gemäß einer weiteren vorteilhaften Ausgestaltung der erfindungsgemäßen Transportwanne weist der Boden der Stützstruktur eine Mehrzahl Löcher auf. Durch diese Maßnahme kann eine weitere Ersparnis von Material und Kosten der Transportwanne erreicht werden. Zudem kann der Wärmeübergang zum Brenngut weiter verbessert werden. Ein weiterer wichtiger Vorteil dieser Ausgestaltung ist darin zu sehen, dass die thermische Belastung der Auskleidung vermindert werden kann.

Gemäß einer weiteren vorteilhaften Ausgestaltung der erfindungsgemäßen Transportwanne ist der Rahmen der Stützstruktur nicht geschlossen ausgebildet, sondern ist mindestens einmal unterbrochen und besteht aus einer Mehrzahl von Pfeilern, die insbesondere als Eckpfeiler ausgebildet sind. Der Rahmen ist zwischen den Pfeilern durch randständige Ausnehmungen vollständig entfernt. Die Stützstruktur besteht in diesem Fall aus dem Boden und den Rahmen bildenden Pfeilern. Durch diese Maßnahme kann eine noch weitere Ersparnis von Material und Kosten der Transportwanne erreicht werden. Zudem kann der Wärmeübergang zum Brenngut noch weiter verbessert werden.

Gemäß einer weiteren vorteilhaften Ausgestaltung der erfindungsgemäßen Transportwanne sitzen die Rahmenplatten der Bodenplatte jeweils auf. Die Bodenplatte kann hierdurch in Richtung senkrecht zur Plattenebene fixiert werden, ohne die thermische Ausdehnung der Bodenplatte in der Plattenebene zu behindern.

Gemäß einer weiteren vorteilhaften Ausgestaltung der erfindungsgemäßen Transportwanne sind keilförmige Eckleisten zur Abdeckung jeweiliger Stoßkanten zwischen Rahmenplatten und Bodenplatte vorgesehen. Durch die Eckleisten kann ein Eindringen von Brenngut in den Bereich der Stoßkanten zwischen Rahmenplatten und Bodenplatte verhindert werden, um hierdurch die Stützstruktur zuverlässig und sicher vor Korrosion zu schützen.

Gemäß einer weiteren vorteilhaften Ausgestaltung der erfindungsgemäßen Transportwanne erstreckt sich die Bodenplatte in der Plattenebene bis jenseits der Rahmenplatten. Die Bodenplatte wird hierbei durch die Rahmenplatten gut gegen den Boden der Stützstruktur geklemmt, wobei die thermische Ausdehnung der Bodenplatte nicht beeinträchtigt ist.

Gemäß einer weiteren vorteilhaften Ausgestaltung der erfindungsgemäßen Transportwanne bestehen die Stützstruktur und die Auskleidung des wannenförmigen Hohlraums aus voneinander verschiedenen Materialien, welche vorzugsweise so gewählt sind, dass das Material der Auskleidung, bezogen auf die chemische Umsetzung zu einem selben Produkt, korrosionsstabiler ist als das Material der Stützstruktur. Die Transportwanne kann hierdurch häufiger verwendet werden, d.h. die Zahl der Brennzyklen bis zum korrosionsbedingten Austausch wird vergrößert. Das Material der Auskleidung kann somit gezielt im Hinblick auf die Korrosionsstabilität bei der Umsetzung bestimmter Ausgangsmaterialien zu einem chemischen Produkt ausgewählt werden, wodurch die Zahl der Nutzungen erhöht wird. Vorteilhaft wird das Material der Stützstruktur im Hinblick auf eine gute Temperaturwechselbeständigkeit gewählt. Möglich ist jedoch auch, dass die Stützstruktur und die Auskleidung aus einem gleichen Material bestehen.

Gemäß einer vorteilhaften Ausgestaltung der Transportwanne enthält die Auskleidung Aluminium-/Magnesium-Spinell, Yttriumoxid $(Y_2O_3)$, Ceroxid $(CeO_2)$, Hafniumoxid, Aluminiumoxid $(Al_2O_3)$, Zirkonoxid $(ZrO_2)$, Magnesiumoxid $(MgO)$, oder Mischungen hiervon, vorzugsweise zu mindestens 80%, besonders bevorzugt zu mindestens 90%. Insbesondere kann die Transportwanne aus Aluminiumoxid $(Al_2O_3)$, Zirkonoxid $(ZrO_2)$, Magnesiumoxid $(MgO)$ oder Mischungen hiervon bestehen.

Gemäß einer vorteilhaften Ausgestaltung der Transportwanne enthält oder besteht die Stützstruktur aus einem Material, welches aus Cordierit, Mullit, einer Cordierit-/Spinell-/Mullit-Mischung, R-SiC, N-SiC, S-SiC, Si-SiC, oxidisch gebundenem SiC, oder deren Mischungen, gewählt ist. Möglich ist auch, dass die Stützstruktur Graphit enthält oder hieraus besteht.

Die erfindungsgemäße Transportwanne kann grundsätzlich für die Herstellung jeglicher chemischer Produkte eingesetzt werden, bei denen ein Transport der Transportwanne durch einen Ofen, insbesondere Durchlaufofen, und eine chemische Umsetzung von in der Transportwanne befindlichen Ausgangsstoffen durch Erhitzen im Ofen erfolgt. Besonders vorteilhaft wird die Transportwanne bei der Herstellung eines (Lithium-Ionen-basierten) aktiven Kathodenmaterials einer Lithium-Ionen-Batterie eingesetzt.

Die Erfindung erstreckt sich auch auf die Verwendung der erfindungsgemäßen Transportwanne zur Herstellung eines Kathodenmaterials einer Lithium-Ionen-Batterie, insbesondere ein Lithium-Mischmetalloxid mit den Übergangsmetallen Nickel (Nickel), Mangan (Mn) und Cobalt (Co), beschrieben durch die allgemeine Formel $LiNi_xMn_yCo_zO_2$ mit x+y+z = 1.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nun anhand von Ausführungsbeispielen näher erläutert, wobei Bezug auf die beigefügten Zeichnungen genommen wird. Es zeigen in vereinfachter, nicht maßstäblicher Darstellung:

Fig. 1-9    verschiedene Darstellungen zur Veranschaulichung eines ersten Ausführungsbeispiels der erfindungsgemäßen Transportwanne;

Fig. 10-11    verschiedene Ansichten eines weiteren Ausführungsbeispiels der erfindungsgemäßen Transportwanne;

Fig. 12-13    verschiedene Ansichten eines weiteren Ausführungsbeispiels der erfindungsgemäßen Transportwanne;

Fig. 14-15    verschiedene Ansichten weiterer Ausführungsbeispiele der erfindungsgemäßen Transportwanne;

Fig. 16-17    verschiedene Ansichten eines weiteren Ausführungsbeispiels der erfindungsgemäßen Transportwanne;

Fig. 18-19    verschiedene Ansichten eines weiteren Ausführungsbeispiels der erfindungsgemäßen Transportwanne.

Ausführliche Beschreibung der Zeichnungen

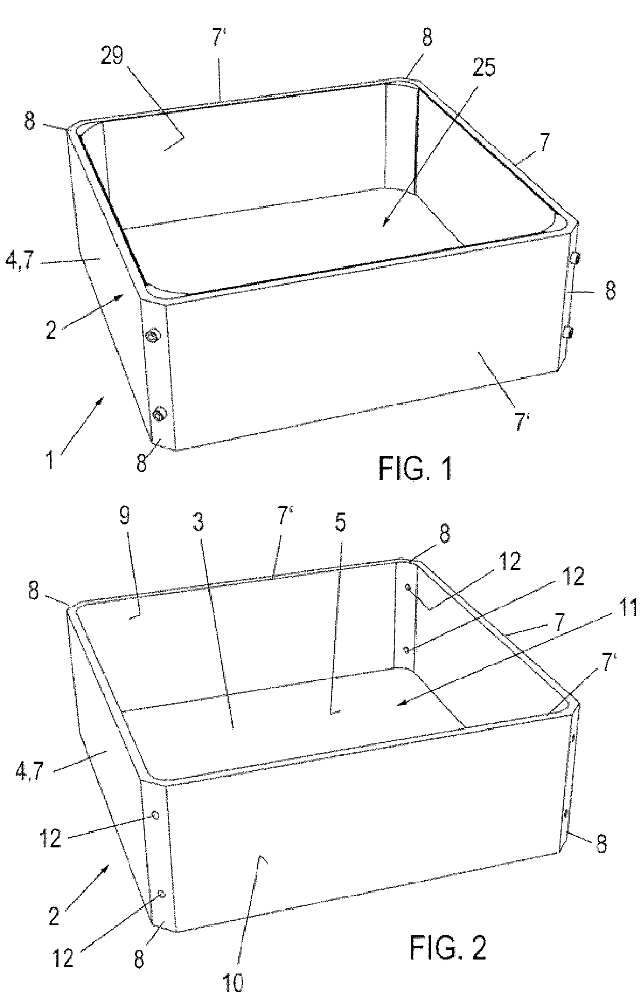

Es wird zunächst Bezug auf die Figuren 1 bis 9 genommen, worin ein erstes Ausführungsbeispiel der erfindungsgemäßen Transportwanne in verschiedenen Ansichten dargestellt ist. Figur 1 zeigt die insgesamt mit der Bezugszahl 1 bezeichnete Transportwanne in einer perspektivischen Ansicht von oben. In den Figuren 2 bis 9 sind jeweils auch Details bzw. Komponenten der Transportwanne 1 gezeigt. Die Transportwanne 1 dient für den Transport und die Erhitzung chemischer Substanzen in einem Ofen, beispielsweise in einem Durchlaufofen. Typischerweise umfasst ein Durchlaufofen ein Rollenbett mit aktiv angetriebenen Rollen, die gemeinsam eine Transportfläche für die Auflage und den Transport der Transportwanne 1 von einem Ofeneingang zu einem Ofenausgang bilden. Da der konkrete Aufbau eines Durchlaufofens für das Verständnis der Erfindung nicht erforderlich ist, erübrigt sich dessen Beschreibung.

Die in Figur 1 dargestellte Transportwanne 1 umfasst eine äußere Stützstruktur 2, die in Figur 2 in einer gesonderten Darstellung gezeigt ist. Die Stützstruktur 2 ist ein einteilig bzw. einstückig ausgebildeter starrer Körper. Die Stützstruktur 2 setzt sich aus einem Boden 3 und einem Rahmen 4 zusammen, wobei Boden 3 und Rahmen 4 auf Grund der Einteiligkeit der Stützstruktur 2 fest miteinander verbunden sind und nicht zerstörungsfrei voneinander gelöst werden können. In der praktischen Verwendung der Transportwanne 1 hat der Boden 3 typischer Weise eine horizontale Ausrichtung, der Rahmen 4 eine vertikale Ausrichtung. Im vorliegenden Ausführungsbeispiel ist der Rahmen 4 ein geschlossener bzw. umlaufender Rahmen. Die Stützstruktur 2 aus Boden 3 und Rahmen 4 bildet hier gleichsam eine Außenkapsel.

Der Boden 3 weist eine typischer Weise ebene, vorderseitige (obere) Bodenfläche 5 und eine rückseitige (untere) Bodenfläche 6 auf. Die rückseitige Bodenfläche 6, welche auch die Bodenfläche der Stützstruktur 2 ist, dient zu Aufsetzen der Transportwanne 1 auf eine Unterlage. Im vorliegenden Ausführungsbeispiel weist die Stützstruktur 2 einen durchgehenden (d.h. nicht unterbrochenen und bzw. kontinuierlichen) Boden 3 auf, der hier beispielsweise in Form einer ebenen Platte ausgebildet ist und sich flächig über den gesamten unteren Bereich der Stützstruktur 2 bis zum Rahmen 4 erstreckt. Der durchgehende Boden 3 weist keine Durchbrechung auf.

Der Rahmen 4 hat im Wesentlichen Rechteckform und kann gedanklich in zwei jeweils einander gegenüberliegende (zueinander parallele) Rahmenabschnitte 7 bzw. 7', die durch hierzu schräg angeordnete Eckabschnitte 8 miteinander verbunden sind, unterteilt werden. In dieser Ausgestaltung weist die Stützstruktur 2 einen geschlossenen bzw. umlaufenden (d.h. nicht unterbrochenen) Rahmen 4 auf. Die Rahmenabschnitte 7, 7' sind hier beispielsweise jeweils plattenförmig und eben ausgebildet. Ein jeweiliger Eckabschnitt 8, der zwei benachbarte Rahmenabschnitte 7, 7' miteinander verbindet, ist in einem Winkel von 45° zu den Rahmenabschnitten 7, 7' angeordnet. Der Rahmen 4 weist eine innenseitige Rahmenfläche 9 und eine außenseitige Rahmenfläche 10 auf.

Die Eckabschnitte 8 des Rahmens 4 der Stützstruktur 2 weisen jeweils Durchbrechungen 12 auf, die hier beispielsweise in Form von Rundlöchern ausgebildet sind. In dem in Figur 2 gezeigten Beispiel verfügen die Eckabschnitte 8 jeweils über zwei Durchbrechungen 12, wobei gleichermaßen eine größere oder kleinere Anzahl von Durchbrechungen 12 vorgesehen sein kann.

Die vorderseitige Bodenfläche 5 und die innenseitige Rahmenfläche 9 begrenzen gemeinsam einen Innenbereich 11 (hier einen nach oben hin offenen Wannenraum) der Stützstruktur 2, der zur Aufnahme von Elementen einer Auskleidung 29 für den wannenförmigen Hohlraum 25 der Transportwanne 1 dient, was im Weiteren näher erläutert wird.

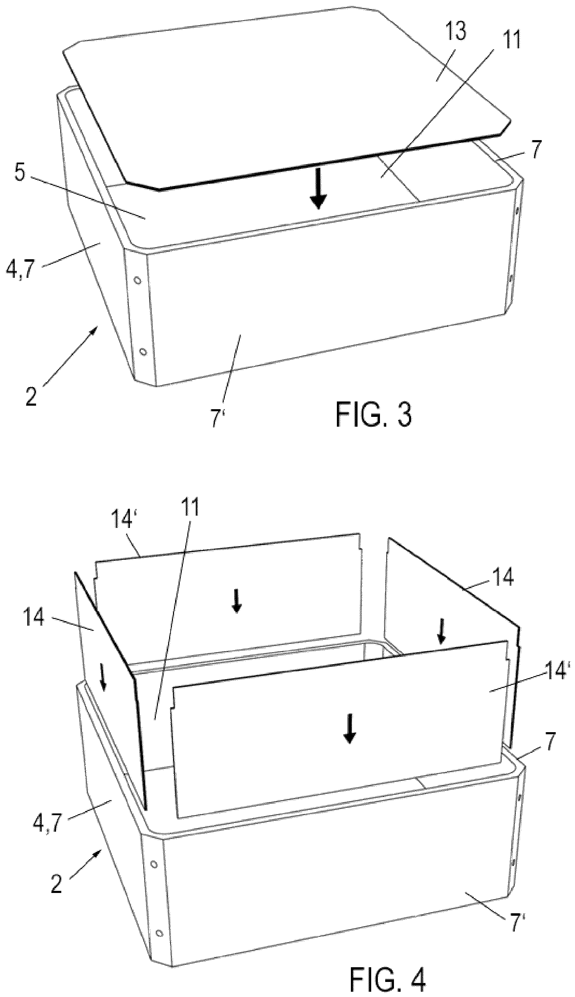

Es wird nun Bezug auf die Figuren 3 und 4 genommen, worin das Einsetzen verschiedener Einlegeteile in den Innenbereich 11 der Stützstruktur 2 veranschaulicht ist. Die Einlegeteile formen die Auskleidung 29, welche den wannenförmigen Hohlraum 25 der Transportwanne 1 umgrenzt. Demnach wird eine Bodenplatte 13 auf die vorderseitige Bodenfläche 5 gelegt und mehrere Rahmenplatten 14, 14' werden angrenzend an die Rahmenabschnitte 7, 7' der innenseitigen Rahmenfläche 9 angelegt. In den Figuren 3 und 4 ist der Einlegevorgang anhand von Pfeilen veranschaulicht. Die Bodenplatte 13 liegt dem Boden 3 frei auf. Die Rahmenplatten 14, 14' werden gegen den Rahmen 4 geklemmt, was im Weiteren näher beschrieben wird. Die Bodenplatte 13 und die Rahmenplatten 14, 14' sind hier beispielsweise jeweils in Form ebener Platten ausgebildet, welche keine Durchbrechung aufweisen. Denkbar wäre auch, dass die Bodenplatte 13 mehrteilig ausgebildet ist und sich beispielsweise aus mehreren Streifen zusammensetzt.

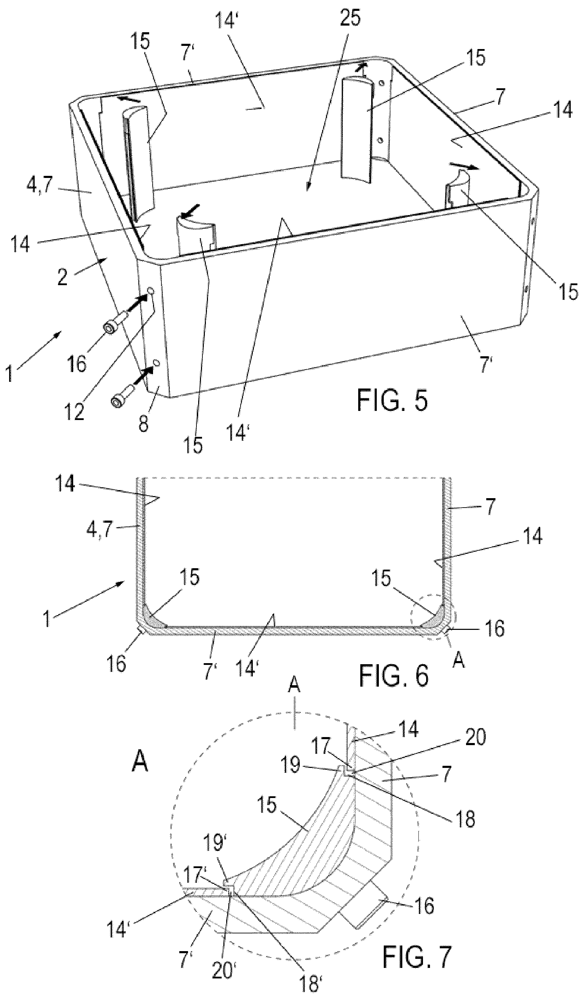

In Figur 5 ist die Transportwanne 1 in einem Zwischenzustand der Montage in einer perspektivischen Ansicht von schräg oben gezeigt. Figur 5 veranschaulicht insbesondere die Befestigung der Rahmenplatten 14, 14' am Rahmen 4. Für die Befestigung der Rahmenplatten 14, 14' am Rahmen 4 sind Eckteile 15 vorgesehen, die im Bereich der Eckabschnitte 8 auf die Randbereiche 17, 17' von zwei unmittelbar benachbarten Rahmenplatten 14, 14' aufgesetzt werden. Das Aufsetzen der Eckteile 15 auf die Eckabschnitte 8 ist in Figur 5 durch Pfeile veranschaulicht.

Eine Befestigung der Eckteile 15 am Rahmen 4 erfolgt jeweils durch Gewindeschrauben 16, welche von außen her durch die Durchbrechungen 12 der Eckabschnitte 8 des Rahmens 4 geführt und mit den Eckteilen 15 verschraubt werden. Die Eckteile 15 sind zu diesem Zweck mit blind endenden (nicht durchbrechenden) Sacklöchern versehen, in denen jeweils ein Gewinde zur Verschraubung mit den Gewindeschrauben 16 ausgebildet ist. Die Sacklöcher und deren Gewinde sind in den Figuren nicht näher dargestellt.

Sacklöcher, wie hier beschrieben, stellen eine technisch besonders gute Lösung dar. Denkbar wäre auch, anstatt von Sacklöchern, durchgehende Löcher vorzusehen (was kostengünstiger ist), wobei die Gewindeschrauben 16 dann mit Schraubenmuttern zu sichern wären. Nachteilig bei dieser Lösung ist jedoch, dass die Schraubenmuttern in den wannenförmigen Hohlraum 25 der Transportwanne 1 ragen, da sie dem korrodierenden Angriff der chemisch aggressiven Substanzen ausgesetzt sind. Um dies zu vermeiden wäre denkbar, eine Aussparung für eine jeweilige Gewindeschraube 16 im Eckteil 15 vorzusehen, welche die Gewindeschraube 16 und die zugehörige Mutter aufnimmt. Generell ist es vorteilhaft, wenn keine nicht zur Auskleidung gehörenden Komponenten in den wannenförmigen Hohlraum 25 ragen, wie beispielsweise die Gewindeschrauben 16.

Die Rahmenplatten 14, 14' werden durch die Eckteile 15 gegen die innenseitige Rahmenfläche 9 geklemmt. Die Bodenplatte 13 wird am Boden 3 nicht befestigt, sondern liegt diesem frei auf. Jedoch kann eine Fixierung der Bodenplatte 13 senkrecht zum Boden 3 mittels einer Klemmung durch die Rahmenplatten 14, 14' erfolgen. Die fertig montierte Transportwanne 1 ist in Figur 1 gezeigt.

In Figur 6 ist ein Horizontalschnitt (parallel zum Boden 3) der fertig montierten Transportwanne 1 gezeigt. Ein Eckbereich der Transportwanne 1 ist durch den gestrichelten Kreis A markiert. Der markierte Eckbereich A der Transportwanne 1 von Figur 6 ist in Figur 7 in einer stark vergrößerten Ansicht gezeigt.

Wie in Figur 7 erkennbar, überlappt das Eckteil 15 jeweilige Randbereiche 17, 17' der angrenzenden Rahmenplatten 14, 14'. Das Eckteil 15 ist zu diesem Zweck auf beiden Seiten mit Nuten 18, 18' versehen, in denen die Randbereiche 17, 17' der Rahmenplatten 14, 14' aufgenommen sind. Die Nuten 18, 18' verfügen jeweils über einen leistenförmigen Vorsprung 19, 19', der den zugehörigen Randbereich 17, 17' der Rahmenplatten 14, 14' überlappt.

Wesentlich hierbei ist, dass die Randbereiche 17, 17' der Rahmenplatten 14, 14' jeweils mit Spiel in der zugehörigen Nut 18, 18' aufgenommen sind, d.h. sie füllen die Nuten 18, 18' nicht vollständig aus. Demnach befindet sich ein freier Raum ("Freiraum") zwischen einem jeweiligen Randbereich 17, 17' der Rahmenplatten 14, 14' und dem Eckteil 15 innerhalb der Nuten 18, 18'. Diese Freiräume 20, 20' sind in Umfangsrichtung des Rahmens 4 (d.h. in der Ebene der Rahmenplatten 14, 14' und in Umlaufrichtung des Rahmens 4) ausgebildet. Die Rahmenplatten 14, 14' haben somit, bezogen auf ihre Plattenebene, jeweils einen Freiraum in mindestens zwei orthogonalen Richtungen, so dass eine thermisch bedingte Ausdehnung der Rahmenplatten 14, 14' ohne Behinderung möglich ist. Mit anderen Worten, die Rahmenplatten 14, 14' sind jeweils mit ausreichend Spiel in den Nuten 18, 18' aufgenommen, so dass eine thermische Ausdehnung der Rahmenlatten 14, 14' in den Plattenebenen ermöglicht ist.

Vorteilhaft ist eine in Umfangsrichtung des Rahmens 4 sich bemessende Breite der Freiräume 20, 20' nur so groß, dass eine thermische Ausdehnung der Rahmenplatten 14 ohne Behinderung möglich ist, jedoch eine übermäßige Verschmutzung verhindert wird. Vorzugsweise beträgt die Breite der Freiräume 20, 20' maximal 2,5 mm.

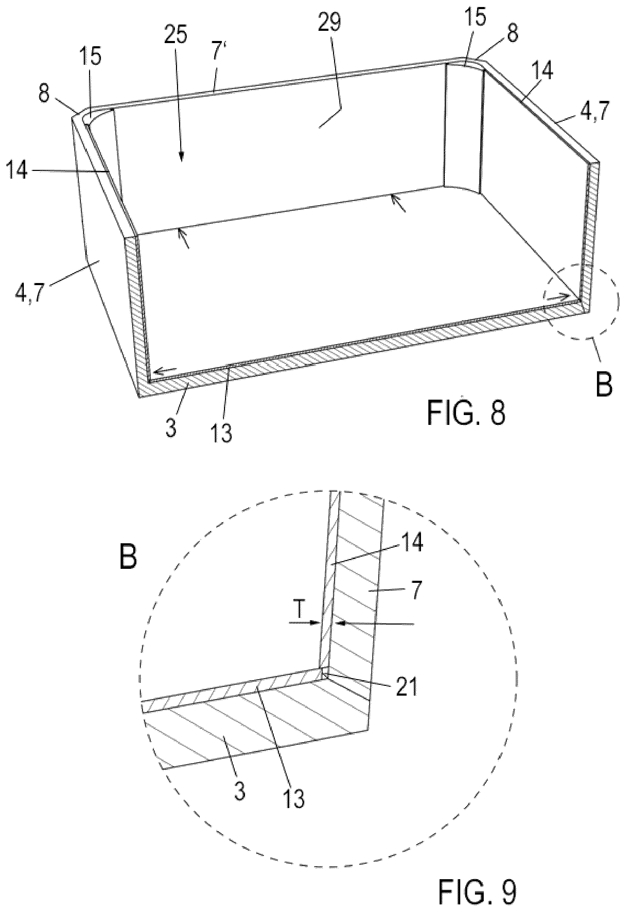

Es wird nun ergänzend Bezug auf die Figuren 8 und 9 genommen, wobei Figur 8 eine Schnittansicht der Transportwanne 1 senkrecht zur Ebene des Bodens 3 zeigt und in Figur 9 eine vergrößerte Schnittansicht gemäß dem in Figur 8 markierten Bereich B dargestellt ist.

Demnach ist auch die Bodenplatte 13 innerhalb des Innenbereichs 11 der Stützstruktur 2 mit Spiel aufgenommen, wobei zwischen der Bodenplatte 13 und den Rahmenabschnitten 7, 7' ein umlaufender Spalt 21 (d.h. ein freier Raum) verbleibt. Die Bodenplatte 13 hat somit, bezogen auf ihre Plattenebene, einen Freiraum in mindestens zwei orthogonalen Richtungen (hier sogar umfänglich), so dass eine thermisch bedingte Ausdehnung der Bodenplatte 13 nicht behindert ist. Die thermisch bedingte Ausdehnung der Bodenplatte 13 ist in Figur 8 durch Pfeile schematisch dargestellt. Mit anderen Worten, die Bodenplatte 13 wird mit ausreichend Spiel von der Stützstruktur 2 gestützt, so dass eine thermische Ausdehnung in der Plattenebene ermöglicht ist.

In dem gezeigten Ausführungsbeispiel haben die Rahmenplatten 14, 14' jeweils eine sich senkrecht zum Spalt 21 bemessende Breite T (siehe Figur 9), welche größer ist als die Breite des Spalts 21, so dass die Rahmenplatten 14, 14' nicht in den Spalt 21 eindringen können, sondern vielmehr der Bodenplatte 13 aufsitzen. Die Breite T der Rahmenplatten 14, 14' bemisst sich parallel zur Ebene des Bodens 3 und ist die kürzeste Abmessung senkrecht durch die Rahmenpatten 14, 14'. Durch die der Bodenplatte 13 aufsitzenden Rahmenplatten 14, 14' kann eine Fixierung der Bodenplatte 13 in Richtung senkrecht zum Boden 3 erreicht werden, wobei die thermische Ausdehnung der Bodenplatte 13 in der Plattenebene nicht beeinträchtigt ist.

Durch die Bodenplatte 13 und die Rahmenplatten 14, 14', sowie hier auch die Eckteile 15, wird der Innenbereich 11 der Stützstruktur 2 vollständig ausgekleidet, d.h. Bodenplatte 13 und Rahmenplatten 14, 14', sowie Eckteile 15, bilden gemeinsam eine vollständige Auskleidung 29 (d.h. Wandung) eines wannenförmigen Hohlraums 25 der Transportwanne 1. Der Hohlraum 25 dient zur Aufnahme von Ausgangsstoffen, welche durch Erhitzen in einem Ofen, z.B. Durchlaufofen, zu einem chemischen Produkt umgesetzt werden sollen. Die Transportwanne 1 wird zu diesem Zweck auf der rückseitigen Bodenfläche 6 im Ofen platziert, insbesondere durch den Ofen transportiert. Die Auskleidung 29 kann von der Stützstruktur 2 zerstörungsfrei entfernt werden.

Besonders vorteilhaft dient die Transportwanne 1 zur Herstellung eines aktiven Kathodenmaterials einer Lithium-Ionen-Batterie, insbesondere ein Lithium-Mischmetalloxid mit den Übergangsmetallen Nickel (Nickel), Mangan (Mn) und Cobalt (Co), beschrieben durch die allgemeine Formel $LiNi_xMn_yCo_zO_2$ mit $x+y+z = 1$. Denkbar wäre aber auch, die Transportwanne 1 für die Herstellung anderer Substanzen einzusetzen, beispielsweise Farbpigmente.

Durch die Transportwanne 1 können die eingangs genannten Probleme im Zusammenhang mit der geforderten hohen Temperaturwechselbeständigkeit bei gleichzeitig guter Korrosionsbeständigkeit der Transportwanne 1 gelöst werden. In vorteilhafter Weise können die Stützstruktur 2 und die Auskleidung 29 gemäß deren Funktion aus verschiedenen Materialien gefertigt werden. Hierbei ist die Stützstruktur 2 durch die Auskleidung 29 gut vor Korrosion geschützt, so dass das Material der Stützstruktur 2 im Wesentlichen im Hinblick auf dessen Temperaturwechselbeständigkeit und Festigkeit gewählt werden kann. Die Korrosionsbeständigkeit ist für die Stützstruktur 2 eher nachrangig. Im Unterschied hierzu muss die Auskleidung 29 gut korrosionsbeständig und temperaturwechselbeständig sein, wobei die Korrosionsbeständigkeit durch die spezielle Materialwahl und die Temperaturbeständigkeit durch die strukturelle Gestaltung der Auskleidung 29 erreicht wird. In besonders vorteilhafter Weise sind die thermischen Ausdehnungen sowohl der Bodenplatte 13 als auch der Rahmenplatten 14, 14' in deren jeweiligen Plattenebenen nicht behindert, so dass sich keine nachteiligen hohen mechanischen Spannungen aufbauen, welche in der Folge schließlich zum Bruch der Transportwanne 1 führen können.

Die Stützstruktur 2 und die Auskleidung 29 der Stützstruktur 2 bestehen vorteilhaft aus voneinander verschiedenen Materialien, wobei die Auskleidung 29 vorzugsweise aus einem Material besteht, das, bezogen auf die chemische Umsetzung desselben Produkts, korrosionsstabiler ist als das Material der Stützstruktur 2.

Die Stützstruktur 2 besteht vorzugsweise aus einem hochfesten, temperaturwechselbeständigen Material mit einer relativ geringen Materialstärke und einem relativ geringen Gewicht. Vorzugsweise enthält oder besteht die Stützstruktur 2 aus einem Material, welches aus R-SiC, N-SiC, S-SiC, Si-SiC, oxidisch gebundenem SiC oder deren Mischungen gewählt ist. Die Stützstruktur 2 kann beispielsweise auch aus Cordierit, Mullit oder einer Cordierit-/Spinell-/Mullit-Mischung bestehen. Dies sind Werkstoffe mit einer hohen Festigkeit, einer geringen Wärmeausdehnung und einer hervorragenden Temperaturwechselbeständigkeit, jedoch im Falle von SiC einer eher geringen Korrosionsbeständigkeit, was jedoch unschädlich ist, da die Stützstruktur 2 durch die Auskleidung 29 gut gegen Korrosion geschützt ist.

Die Auskleidung 29 enthält vorzugsweise Aluminium/Magnesium-Spinell, Yttriumoxid ($Y_2O_3$), Ceroxid ($CeO_2$), Hafniumoxid, Aluminiumoxid ($Al_2O_3$), Magnesiumoxid (MgO) Zirkonoxid ($ZrO_2$), oder Mischungen hieraus wobei der Gehalt an diesen Substanzen vorzugsweise mindestens 80%, besonders bevorzugt mindestens 90% beträgt. Insbesondere kann die Auskleidung 29 aus diesen Substanzen auch bestehen. Möglichst reines Aluminiumoxid, welches idealerweise dicht gebrannt ist, ist ein Werkstoff mit besonders guter Korrosionsbeständigkeit, jedoch eher geringer Temperaturwechselbeständigkeit. Diese Materialien können gegossen, gepresst oder im Plasma- oder Foliengießverfahren hergestellt werden.

Vorzugsweise haben die Rahmenplatten 14, 14' und/oder die Bodenplatte 13 jeweils eine relativ dünne Wandstärke im Bereich von 1,5 mm bis 5 mm und sind beispielsweise in Form einer Folie ausgebildet.

Die Stützstruktur 2 kann wegen des guten Schutzes vor Korrosion durch die Auskleidung 29 und die Fertigung aus mindestens einem der genannten Materialien mit einer guten Temperaturwechselbeständigkeit sehr häufig eingesetzt werden. Beispielsweise kann die Lebensdauer der Stützstruktur 2 mehr als 1000 Zyklen betragen. Die Auskleidung 29 ist von der Stützstruktur 2 zerstörungsfrei entfernbar und kann deshalb in einfacher Weise separat ersetzt werden, falls sie korrodiert ist, und in einfacher Weise einer Wiederverwendung zugeführt werden. Da das Material der Auskleidung 29 gezielt auf die Korrosionsbeständigkeit wählbar ist und die Temperaturwechselbeständigkeit der Auskleidung 29 durch deren strukturelle Gestaltung gewährleistet ist, kann auch die Auskleidung 29 bei einer sehr großen Zahl von Brennzyklen eingesetzt werden, ohne dass sie ausgetauscht werden müsste.

Gleichermaßen können die Bodenplatte 13 und die Rahmenplatten 14, 14' aus voneinander verschiedenen Materialien bestehen, wobei die Bodenplatte 13 vorteilhaft aus einem Material besteht, das, bezogen auf die chemische Umsetzung desselben Produkts, korrosionsstabiler ist als das Material der Rahmenplatten 14, 14'. Bevorzugt enthält die Bodenplatte 13 zu mindestens 80%, besonders bevorzugt zu mindestens 90% Alumi-

nium/Magnesium-Spinell, Yttriumoxid ($Y_2O_3$), Ceroxid ($CeO_2$), Hafniumoxid, Aluminiumoxid ($Al_2O_3$), Magnesiumoxid (MgO), Zirkonoxid ($ZrO_2$) oder Mischungen hieraus. Die Bodenplatte 13 kann auch aus diesem Materialien bestehen. Die Bodenplatte 13 kann auch eine Beschichtung enthaltend eines dieser Materialien oder Mischungen daraus aufweisen.

Vorzugsweise bestehen die Rahmenplatten 14, 14' aus einem Material, welches aus der Gruppe, bestehend aus Aluminiumoxid, Zirkonoxid, Magnesiumoxid, R-SiC, N-SiC, S-SiC und Si-SiC, oder deren Mischungen, gewählt ist. Beispielsweise können die Rahmenplatten 14, 14' auch aus Cordierit oder einer Cordierit-/Spinell-/Mullit-Mischung bestehen.

Es versteht sich, dass die Bodenplatte 13 und die Rahmenplatten 14, 14' auch aus einem gleichen Material bestehen können, welches vorzugsweise mindestens 80%, besonders bevorzugt mindestens 90%, Aluminium/Magnesium-Spinell, Yttriumoxid ($Y_2O_3$), Ceroxid ($CeO_2$), Hafniumoxid, Aluminiumoxid ($Al_2O_3$), Magnesiumoxid (MgO) Zirkonoxid ($ZrO_2$) oder deren Mischungen ist. Die Bodenplatte 13 und die Rahmenplatten 14, 14' können auch eine Beschichtung enthaltend eines dieser Materialien oder Mischungen daraus aufweisen.

Die Bodenplatte 13 und die Rahmenplatten 14, 14', sowie die Eckteile 15, können separat ausgetauscht werden. Beispielsweise kann die Bodenplatte 13 separat ausgetauscht werden, wenn sie stärker korrodiert sein sollte, als die Rahmenplatten 14, 14'. Hierdurch können Kosten und Material eingespart werden. Gleichermaßen ist eine einfache Reinigung der Bodenplatte 13 oder der Rahmenplatten 14, 14' beispielsweise durch Sandstrahlen möglich. Denkbar wäre auch, die Bodenplatte 13 mehrteilig, beispielsweise aus Streifen, zu formen. In diesem Fall wäre auch ein separater Austausch von Streifen möglich.

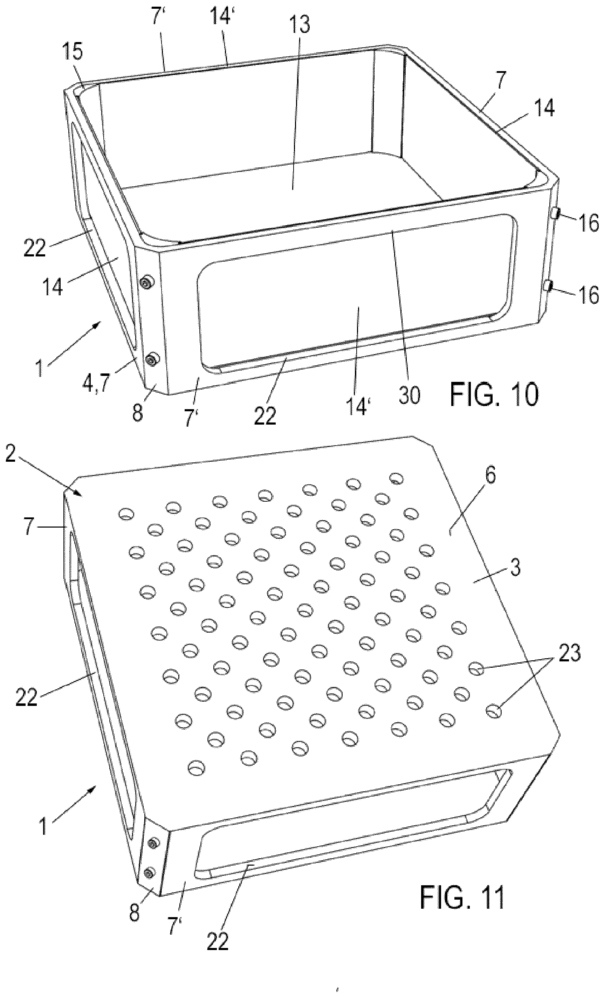

Es wird nun Bezug auf die Figuren 10 bis 19 genommen, worin anhand verschiedener Ansichten weitere Ausführungsbeispiele der erfindungsgemäßen Transportwanne 1 veranschaulicht sind. Um unnötige Wiederholungen zu vermeiden, werden lediglich die Unterschiede zum voranstehend beschriebenen Ausführungsbeispiel der Figuren 1 bis 9 erläutert und ansonsten wird auf obige Ausführungen Bezug genommen.

Seien zunächst die Figuren 10 und 11 betrachtet. Figur 10 zeigt eine weitere Ausgestaltung der Transportwanne 1 in einer perspektivischen Ansicht von schräg oben, Figur 11 zeigt die Unterseite der Transportwanne 1.

Demnach sind die Rahmenabschnitte 7, 7' des Rahmens 4 der Stützstruktur 2 (jedoch nicht die Rahmenplatten 14, 14') jeweils mit einer hier beispielsweise annähernd rechteckförmigen Ausnehmung 22 versehen. Die Ausnehmungen 22 erstrecken sich jeweils über einen Großteil (vorzugsweise mindestens 50%) der Fläche des zugehörigen Rahmenabschnitts 7, 7'.

Wie in Figur 11 dargestellt, ist zudem der Boden 3 der Stützstruktur 2 (jedoch nicht die Bodenplatte 13) mit einer Vielzahl von Löchern 23 versehen. Durch die Ausnehmungen 22 und die Löcher 23 kann das Gewicht der Transportwanne 1 verringert werden. Zudem können Material und Kosten für die Stützstruktur 2 eingespart werden.

Ein weiterer Vorteil ergibt sich durch den verbesserten Wärmeübergang zum Brenngut. Insbesondere kann hierdurch in vorteilhafter Weise der Nachteil einer relativ schlechten Wärmeleitfähigkeit von beispielsweise Aluminiumoxid-reichen Materialien verringert werden. Die Rahmenplatten 14, 14' haben zu diesem Zweck vorteilhaft eine relativ geringe Wandstärke. Vorteilhaft haben die Ausnehmungen 22 eine große Ausdehnung in Bezug auf die Fläche des zugehörigen Rahmenabschnitts 7, 7'. Die Wärme kann somit ohne große Verzögerung an das Brenngut abgegeben werden.

Die Ausnehmungen 22 der Rahmenabschnitte 7, 7' sind hier beispielsweise jeweils vollumfänglich von dem Material des zugehörigen Rahmenabschnitts 7, 7 umgeben, d.h. die Ausnehmungen 22 sind jeweils innenliegend ausgebildet. Dies hat den Vorteil, dass an der Öffnung des wannenförmigen Hohlraums 25 der Transportwanne 1 ein Rahmensteg 30 vorhanden ist, der als Stoßkante für die Rahmenplatten 14, 14' dient und diese vor Beschädigung schützt, z.B. beim Befüllen, Entleeren und Säubern der Transportwanne 1 und generell bei jeder Handhabung außerhalb des Brennvorgangs. Dies ermöglicht in besonders vorteilhafter Weise die Verwendung von Rahmenplatten 14, 14' mit besonders geringer Wandstärke, die beispielsweise auch als Folie mit einer geringen Wandstärke von z.B. 1, 5 mm ausgebildet sein können. Ebenso können hier aufgrund der geringen mechanischen Belastung Rahmenplatten 14, 14' und eine Bodenplatte 13 mit geringer Festigkeit und hoher Porosität zum Einsatz gebracht werden. Diese ermöglichen erhöhten Sauerstoff- und Energietransport zum Brenngut.

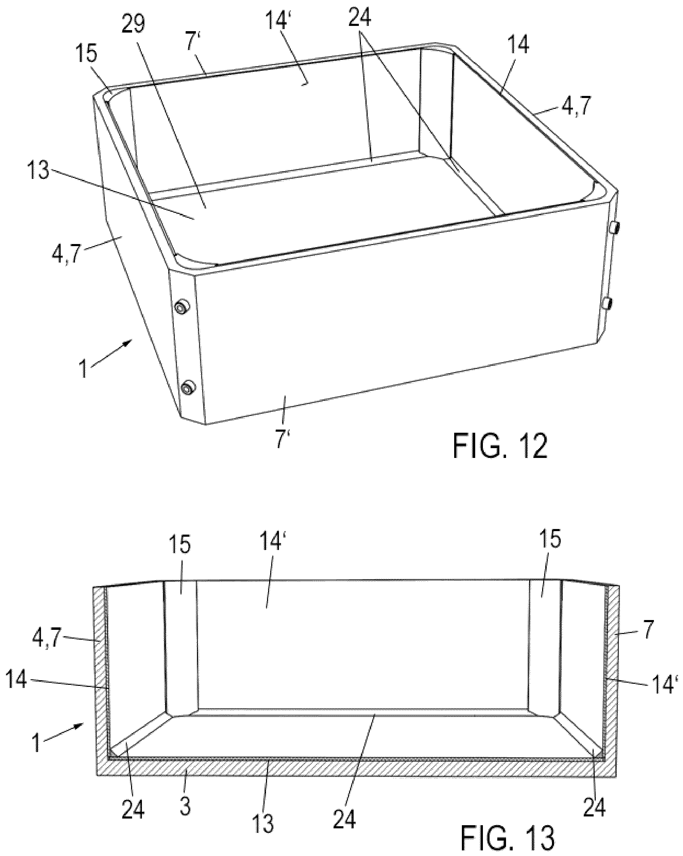

In den Figuren 12 und 13 ist ein weiteres Ausführungsbeispiel der erfindungsgemäßen Transportwanne 1 veranschaulicht. Figur 12 zeigt die Transportwanne 1 in einer perspektivischen Ansicht von schräg oben, Figur 11 zeigt einen (Vertikal-)Schnitt der Transportwanne 1 senkrecht durch den Boden 3. In diesem Ausführungsbeispiel der Transportwanne 1 sind hier beispielsweise keilförmige Eckleisten 24 am Übergang der Rahmenplatten 14, 14' zur Bodenplatte 13 vorgesehen. Durch die Eckleisten 24 kann der Bereich der jeweiligen Stoßkante zwischen Bodenplatte 14 und Rahmenplatten 14, 14' abgedichtet werden, so dass zuverlässig und sicher verhindert wird, dass Material eintritt und an die Stützstruktur 2 gelangt. Die Eckleisten 24 bilden einen Teil der Auskleidung 29 der Transportwanne 1 und somit des wannenförmigen Hohlraums 25 der Transportwanne 1. Mit ihrer Keilform sind die Eckleisten 24 geometrisch gut an den Übergang angepasst. Vorteilhaft bestehen die Eckleisten 24 aus dem gleichen Material wie die Bodenplatte 13 und die Rahmenplatten 14, 14'. Bevorzugt enthalten die Eckleisten 24 mindestens 80%, besonders bevorzugt mindestens 90%, Aluminium/Magnesium-Spinell, Yttriumoxid ($Y_2O_3$), Ceroxid ($CeO_2$), Hafniumoxid, Aluminiumoxid ($Al_2O_3$), Magnesiumoxid (MgO), Zirkonoxid ($ZrO_2$) oder Mischungen hieraus. Die Eckleisten 24 können auch aus diesen Materialien bestehen.

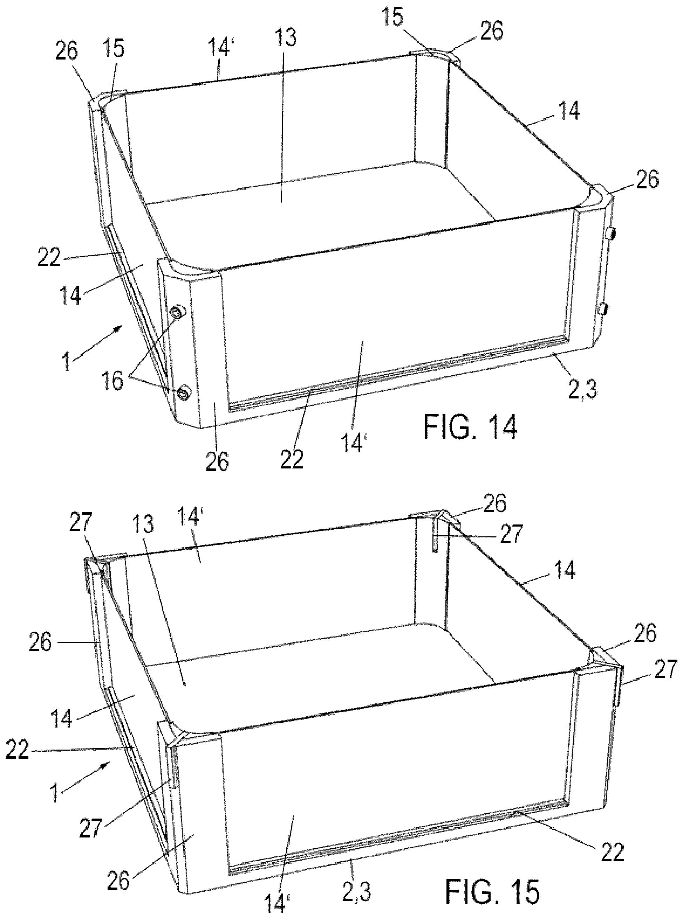

In den Figuren 14 und 15 sind weitere Ausführungsbeispiele der erfindungsgemäßen Transportwanne 1 veranschaulicht. Figur 14 zeigt die Transportwanne 1 in einer perspektivischen Ansicht von schräg oben. In Figur 15 ist eine Variante des Ausführungsbeispiels von Figur 14 gleichermaßen in einer perspektivischen Ansicht von schräg oben gezeigt.

In der Ausgestaltung von Figur 14 sind analog zur Ausgestaltung von Figur 10 die Rahmenabschnitte 7, 7' des Rahmens 4 der Stützstruktur 2 (jedoch nicht die Rahmenplatten 14, 14') jeweils mit einer Ausnehmung 22 versehen, die sich über eine solche Fläche erstreckt, dass lediglich Eckfeiler 26 des Rahmens 4 verbleiben, an denen die Eckteile 15 zur Befestigung der Rahmenplatten 14, 14' angeschraubt sind. Die Stützstruktur 2 setzt sich bei dieser Ausgestaltung aus den Eckpfeilern 26 und dem Boden 3 zusammen, Rahmenstege 30 wie in Figur 10 fehlen. Der Rahmen 4 ist somit ein offener Rahmen und besteht nur aus den Eckpfeilern 26. Die Rahmenabschnitte 7, 7' sind größtenteils (zu mehr als 80%) ausgespart. Die Eckfeiler 26 setzen sich jeweils aus dem Eckabschnitt 8 und einem kleinen Bereich des angrenzenden Rahmenabschnitts 7, 7' zusammen. Durch diese Maßnahme können Gewicht, Material und Kosten in erheblichem Umfang eingespart werden. Zudem kann der Wärmeübergang zum Brenngut noch weiter verbessert werden.

Im Ausführungsbeispiel von Figur 15 sind die Gewindeschrauben 16 ersetzt durch federelastische Klammern 27, welche zur Befestigung der Eckteile 15 an den Eckpfeilern 26 dienen. Die Klammern 27 sind von oben her auf die Eckteile 15 und die Eckpfeiler 26 aufgesteckt. Die Klammern 27 bestehen aus einem keramischen Material mit einer hohen Temperaturwechselbeständigkeit. Vorteilhaft bestehen die Klammern 27 aus speziell stabilisiertem Zirkonoxid.

Die Klammern 27 haben hier beispielsweise eine U-Form und können in einfacher Weise aufgesteckt bzw. entfernt werden, um die Eckteile 15 und den Rahmen 4 fest miteinander zu verbinden oder zu lösen. Die Klammern 27 sind typischer Weise mit einer Einrichtung (Nase) versehen, so dass sie dauerhaft in einem arretierten Zustand verbleiben, was nicht näher dargestellt ist. Eine Klemmung an den vier Eckabschnitten 8 sorgt für eine dauerhaft sichere Verbindung von Rahmen 4 und Rahmenplatten 14, 14'.

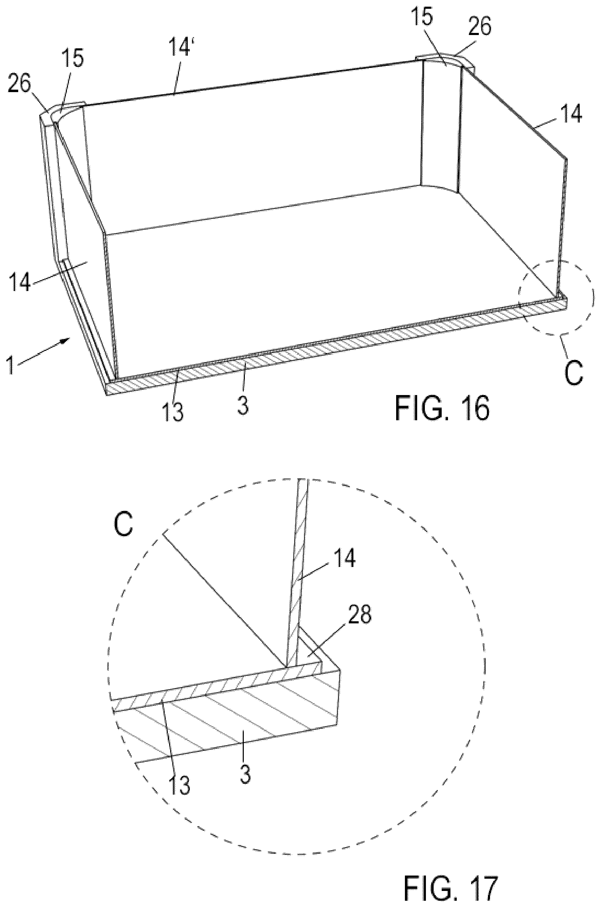

In den Figuren 16 und 17 ist ein weiteres Ausführungsbeispiel der erfindungsgemäßen Transportwanne 1 veranschaulicht, wobei Figur 16 eine Schnittansicht senkrecht zur Ebene des Bodens 3 ist und Figur 17 eine vergrößerte Schnittansicht gemäß dem Bereich C zeigt. Diese Ausgestaltung bildet die Ausgestaltungen von Figur 14 und Figur 15 fort.

Demnach erstreckt sich die Bodenplatte 13 im Bereich der Rahmenplatten 14, 14' bis jenseits der Rahmenplatten 14, 14' hinaus, wobei die Rahmenplatten 14, 14' der Bodenplatte 13 jeweils mit ihrer ganzen Breite aufsitzen. Die Bodenplatte 13 ist somit größer als der durch die Rahmenplatten 14, 14' umgrenzte Bereich und weist diesen gegenüber einen Überstand 28 auf. Auch diese Ausgestaltung bietet den Vorteil, dass die thermische Ausdehnung der Bodenplatte 13 in deren Ebene nicht behindert ist, die Bodenplatte 13 jedoch gut gegen den Boden 3 geklemmt wird. Die Befestigung der Rahmenplatten 14, 14' an den Eckpfeilern 26 kann wie in den Figuren 14 und 15 erfolgen, so dass auf deren Darstellung in Figur 16 verzichtet wurde.

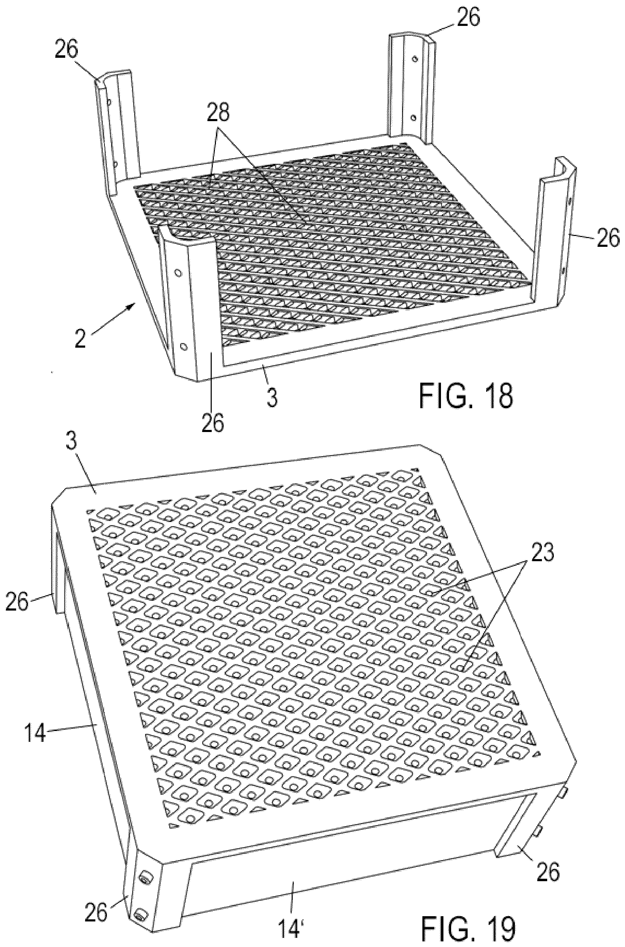

In den Figuren 18 und 19 ist ein weiteres Ausführungsbeispiel der erfindungsgemäßen Transportwanne 1 veranschaulicht, welches die Ausgestaltung von Figur 14 fortbildet. Figur 18 zeigt nur die Stützstruktur 2 der Transportwanne 1 in einer perspektivischen Ansicht von schräg oben. Figur 19 zeigt die Unterseite der kompletten Transportwanne 1.

Demnach setzt sich die Stützstruktur 2 aus dem Boden 3 und den Eckpfeilern 26 zusammen. Ergänzend zu den sehr großen Ausnehmungen 22 des Rahmens 4 ist der Boden 3 der Stützstruktur 2 mit einer Vielzahl hier beispielsweise rautenförmiger Löcher 23 versehen. Die Löcher 23 sind in regelmäßiger Weise, hier beispielsweise in Form eines Gitters, angeordnet. Durch diese Maßnahme können Gewicht, Material und Kosten der Stützstruktur 2 weiter verringert werden. Die vorderseitige Bodenfläche 5 ist mit einer Mehrzahl parallel angeordneter Auflagestege 28 versehen, die zur Auflage der Bodenplatte 13 dienen.

Aus obigen Ausführungen ergibt sich, dass die Erfindung eine verbesserte Transportwanne für den Transport und die Erhitzung chemischer Substanzen zur Verfügung stellt. Die Transportwanne weist in vorteilhafter Weise eine hohe Korrosionsbeständigkeit und gleichzeitig eine gute Temperaturwechselbeständigkeit auf. Die gute Temperaturwechselbeständigkeit wird durch die Materialwahl für die Stützstruktur und die geometrische Ausbildung der Auskleidung des wannenförmigen Hohlraums der Transportwanne erreicht. Eine hohe Korrosionsbeständigkeit kann durch die Materialwahl für die Auskleidung erreicht werden. Die Materialien für die Stützstruktur und die Auskleidung können gezielt auf deren wesentlichem Funktionen abgestimmt werden. Das Material für die Auskleidung kann vorteilhaft so gewählt werden, dass die Reinheit bzw. Qualität des Brennguts nicht beeinträchtigt wird. Die Transportwanne kann somit für eine Vielzahl von Brennzyklen eingesetzt werden, welche gegenüber der Zahl der Brennzyklen herkömmlicher Transportwannen deutlich erhöht ist. Durch die insgesamt geringeren Kosten für die Transportwannen können die Kosten für die großtechnische Herstellung chemischer Produkte vermindert werden. Dies gilt insbesondere für die Herstellung von aktiven Kathodenmaterialien für Lithium-Ionen-Batterien. Gleichermaßen kann der durch die korrosionsbeschädigten Transportwannen anfallende Sondermüll stark verringert werden.

Bezugszeichenliste

| | |
|---|---|
| 1 | Transportwanne |
| 2 | Stützstruktur |
| 3 | Boden |
| 4 | Rahmen |
| 5 | vorderseitige Bodenfläche |
| 6 | rückseitige Bodenfläche |
| 7, 7' | Rahmenabschnitt |
| 8 | Eckabschnitt |
| 9 | innenseitige Rahmenfläche |
| 10 | außenseitige Rahmenfläche |
| 11 | Innenbereich |
| 12 | Durchbrechung |
| 13 | Bodenplatte |
| 14, 14' | Rahmenplatte |
| 15 | Eckteil, Klemmleiste |
| 16 | Gewindeschraube |
| 17, 17' | Randbereich |
| 18, 18' | Nut |
| 19, 19' | Vorsprung |
| 20, 20' | Freiraum |
| 21 | Spalt |
| 22 | Ausnehmung |
| 23 | Loch |
| 24 | Eckleiste |
| 25 | Hohlraum |
| 26 | Eckpfeiler |
| 27 | Klammer |
| 28 | Auflagesteg |
| 29 | Auskleidung |
| 30 | Rahmensteg |

**Patentansprüche**

1. Transportwanne (1) zum Transportieren und Erhitzen chemischer Substanzen, welche eine einteilige Stützstruktur (2) mit einem Boden (3) und einem damit fest verbundenen Rahmen (4) umfasst, wobei die Stützstruktur (2) eine Auskleidung (29) eines wannenförmigen Hohlraums (25) zur Aufnahme der chemischen Substanzen stützt, wobei die Auskleidung (29) eine dem Boden (3) aufliegende Bodenplatte (13) und mehrere gegen den Rahmen (4) geklemmte Rahmenplatten (14, 14') umfasst, wobei die Auskleidung (29) von der Stützstruktur (2) so gestützt ist, dass die thermischen Ausdehnungen von Bodenplatte (13) und Rahmenplatten (14, 14') in deren Plattenebenen nicht behindert sind,

wobei die Rahmenplatten (14, 14') durch Klemmleisten (15) mit dem Rahmen (4) verklemmt sind, wobei die Klemmleisten (15) jeweils mindestens eine Nut (18, 18') zur Aufnahme eines Randbereichs (17, 17') einer angrenzenden Rahmenplatte (14, 14') aufweisen, wobei der Randbereich (17, 17') mit Spiel in der Nut (18, 18') der Klemmleiste (15) aufgenommen ist, und
wobei die Bodenplatte (13) dem Boden (3) der Stützstruktur (2) aufliegt und mit Spiel innerhalb des Rahmens (4) der Stützstruktur (2) und den übrigen Bestandteilen (14, 14') der Auskleidung (29) angeordnet ist.

2. Transportwanne (1) nach Anspruch 1, bei welcher der Rahmen (4) der Stützstruktur (2) ein umlaufender Rahmen ist.

3. Transportwanne (1) nach Anspruch 2, bei welcher der umlaufende Rahmen (4) der Stützstruktur (2) plattenförmige Rahmenabschnitte (7, 7') aufweist, wobei mindestens ein plattenförmiger Rahmenabschnitt (7, 7') mindestens eine Ausnehmung (22) aufweist.

4. Transportwanne (1) nach Anspruch 3, bei welcher die mindestens eine Ausnehmung (22) eine innenliegende Ausnehmung ist.

5. Transportwanne (1) nach Anspruch 3, bei welcher die mindestens eine Ausnehmung (22) eine randständige Ausnehmung ist.

6. Transportwanne (1) nach einem der Ansprüche 1 bis 5, bei welcher der Boden (3) der Stützstruktur (2) eine Mehrzahl Löcher (23) aufweist.

7. Transportwanne (1) nach einem der Ansprüche 1 bis 5, bei welcher der Rahmen (4) der Stützstruktur aus einer Mehrzahl von Pfeilern (26) besteht.

8. Transportwanne (1) nach einem der Ansprüche 1 bis 7, bei welcher die Rahmenplatten (14, 14') jeweils der Bodenplatte (13) aufsitzen.

9. Transportwanne (1) nach Anspruch 8, welche keilförmige Eckleisten (24) zur Abdeckung jeweiliger Stoßkanten zwischen Rahmenplatten (14, 14') und Bodenplatte (13) aufweist.

10. Transportwanne (1) nach einem der Ansprüche 1 bis 9, bei welcher sich die Bodenplatte (13) in der Plattenebene bis jenseits der Rahmenplatten (14, 14') erstreckt.

11. Transportwanne (1) nach einem der Ansprüche 1 bis 10, bei welcher das Material der Auskleidung (29), bezogen auf die chemische Umsetzung eines selben Produkts, korrosionsstabiler ist als das Material der Stützstruktur (2).

12. Transportwanne (1) nach einem der Ansprüche 1 bis 11, bei welcher die Stützstruktur (2) ein Material enthält, welches aus Cordierit, Mullit, einer Cordierit-/Spinell-/Mullit-Mischung, R-SiC, N-SiC, S-SiC, Si-SiC, oxidisch gebundenem Si-C oder deren Mischungen, gewählt ist und/oder bei welcher die Auskleidung (29) zu mindestens 80% Aluminiumoxid ($Al_2O_3$), Magnesiumoxid (MgO), Zirkonoxid ($ZrO_2$) oder Mischungen hieraus, enthält.

13. Transportwanne (1) nach einem der Ansprüche 1 bis 12, bei welcher die Bodenplatte (13) eine Beschichtung aufweist, enthaltend zu mindestens 80% Aluminium/Magnesium-Spinell, Yttriumoxid ($Y_2O_3$), Ceroxid ($CeO_2$), Hafniumoxid, Aluminiumoxid ($Al_2O_3$), Magnesiumoxid (MgO), Zirkonoxid ($ZrO_2$) oder Mischungen daraus.

14. Transportwanne (1) nach einem der Ansprüche 1 bis 13, bei welcher die Bodenplatte (13) und die Rahmenplatten (14, 14') eine Beschichtung aufweisen, enthaltend zu mindestens 80% Aluminium/Magnesium-Spinell, Yttriumoxid ($Y_2O_3$), Ceroxid ($CeO_2$), Hafniumoxid, Aluminiumoxid ($Al_2O_3$), Magnesiumoxid (MgO), Zirkonoxid ($ZrO_2$) oder Mischungen daraus.

15. Verwendung der Transportwanne (1) nach einem der Ansprüche 1 bis 14 zur Herstellung eines Kathodenmaterials für eine Lithium-Ionenbatterie.

**Claims**

1. Transport tray (1) for transporting and heating chemical substances, which comprises a one-piece support structure (2) with a base (3) and a frame (4) fixedly connected thereto, wherein the support structure (2) supports a lining (29) of a tray-shaped cavity (25) for accommodating the chemical substances, wherein the lining (29) comprises a base plate (13) lying on the base (3) and multiple frame plates (14, 14') clamped against the frame (4), wherein the lining (29) is supported by the support structure (2) such that the thermal expansions of the base plate (13) and the frame plates (14, 14') in their plate planes are not impeded,

> wherein the frame plates (14, 14') are clamped to the frame (4) by clamping strips (15), wherein the clamping strips (15) have in each case at least one groove (18, 18') for accommodating an edge region (17, 17') of an adjacent frame plate (14, 14'), wherein the edge region (17, 17') is accommodated with play in the groove (18, 18') of the clamping strip (15), and

wherein the base plate (13) lies on the base (3) of the support structure (2) and is arranged with play within the frame (4) of the support structure (2) and the remaining components (14, 14') of the lining (29).

2. Transport tray (1) according to claim 1, wherein the frame (4) of the support structure (2) is a perimetral frame.

3. Transport tray (1) according to claim 2, wherein the perimetral frame (4) of the support structure (2) comprises plate-shaped frame sections (7, 7'), wherein at least one plate-shaped frame section (7, 7') has at least one cutout (22).

4. Transport tray (1) according to claim 3, wherein the at least one cutout (22) is an internal cutout.

5. Transport tray (1) according to claim 3, wherein the at least one cutout (22) is an edge cutout.

6. Transport tray (1) according to one of claims 1 through 5, wherein the base (3) of the support structure (2) has a plurality of holes (23).

7. Transport tray (1) according to one of claims 1 through 5, wherein the frame (4) of the support structure consists of a plurality of pillars (26).

8. Transport tray (1) according to one of claims 1 through 7, wherein the frame plates (14, 14') are in each case seated on the base plate (13).

9. Transport tray (1) according to claim 8, which has wedge-shaped corner strips (24) for covering respective abutting edges between the frame plates (14, 14') and the base plate (13).

10. Transport tray (1) according to one of claims 1 through 9, wherein the base plate (13) extends beyond the frame plates (14, 14') in the plate plane.

11. Transport tray (1) according to one of claims 1 through 10, wherein the material of the lining (29) is more corrosion-resistant than the material of the support structure (2), based on the chemical reaction of the same product.

12. Transport tray (1) according to one of claims 1 through 11, wherein the support structure (2) contains a material selected from cordierite, mullite, a cordierite/spinel/mullite mixture, R-SiC, N-SiC, S-SiC, Si-SiC, oxidically bonded Si-C, or mixtures thereof, and/or wherein the lining (29) contains at least 80% aluminum/magnesium spinel, yttrium oxide ($Y_2O_3$), cerium oxide ($CeO_2$), hafnium oxide, aluminum oxide ($Al_2O_3$), magnesium oxide (MgO),

zirconium oxide ($ZrO_2$), or mixtures thereof.

13. Transport tray (1) according to one of claims 1 through 12, wherein the base plate (13) has a coating, comprising at least 80% aluminum/magnesium spinel, yttrium oxide ($Y_2O_3$), cerium oxide ($CeO_2$), hafnium oxide, aluminum oxide ($Al_2O_3$), magnesium oxide (MgO), zirconium oxide ($ZrO_2$), or mixtures thereof.

14. Transport tray (1) according to one of claims 1 through 13, wherein the base plate (13) and the frame plates (14, 14') have a coating, comprising at least 80% aluminum/magnesium spinel, yttrium oxide ($Y_2O_3$), cerium oxide ($CeO_2$), hafnium oxide, aluminum oxide ($Al_2O_3$), magnesium oxide (MgO), zirconium oxide ($ZrO_2$), or mixtures thereof.

15. Use of the transport tray (1) according to one of claims 1 through 14 for producing a cathode material for a lithium-ion battery.

## Revendications

1. Plateau de transport (1) pour transporter et chauffer des substances chimiques, qui comprend une structure de support monobloc (2) avec une base (3) et un cadre (4) relié de manière fixe, dans lequel la structure de support (2) supporte un revêtement (29) d'une cavité en forme de plateau (25) pour loger les substances chimiques, dans lequel le revêtement (29) comprend une plaque de base (13) reposant sur la base (3) et plusieurs plaques de cadre (14, 14') serrées contre le cadre (4), dans lequel le revêtement (29) est soutenu par la structure de support (2) de telle sorte que les dilatations thermiques de la plaque de base (13) et des plaques de cadre (14, 14') dans leurs plans ne sont pas entravées,

dans lequel les plaques de cadre (14, 14') sont fixées au cadre (4) par des bandes de serrage (15), dans lequel les bandes de serrage (15) ont chacune au moins une rainure (18, 18') pour loger une zone de bord (17, 17') d'une plaque de cadre adjacente (14, 14'), dans lequel la zone de bord (17, 17') est logée avec jeu dans la rainure (18, 18') de la bande de serrage (15), et la plaque de base (13) repose sur la base (3) de la structure de support (2) et est disposée avec du jeu dans le cadre (4) de la structure de support (2) et les autres composants (14, 14') du revêtement (29).

2. Plateau de transport (1) selon la revendication 1, dans lequel le cadre (4) de la structure de support (2) est un cadre périmétrique.

3. Plateau de transport (1) selon la revendication 2, dans lequel le cadre périmétrique (4) de la structure de support (2) comprend des sections de cadre en forme de plaque (7, 7'), dans lesquelles au moins une section de cadre en forme de plaque (7, 7') présente au moins une découpe (22).

4. Plateau de transport (1) selon la revendication 3, dans lequel l'au moins une découpe (22) est une découpe interne.

5. Plateau de transport (1) selon la revendication 3, dans lequel l'au moins une découpe (22) est une découpe de bord.

6. Plateau de transport (1) selon l'une des revendications 1 à 5, dans lequel la base (3) de la structure de support (2) comporte plusieurs trous (23).

7. Plateau de transport (1) selon l'une des revendications 1 à 5, dans lequel le cadre (4) de la structure de support consiste en une pluralité de piliers (26).

8. Plateau de transport (1) selon l'une des revendications 1 à 7, dans lequel les plaques de cadre (14, 14') sont dans chaque cas assises sur la plaque de base (13).

9. Plateau de transport (1) selon la revendication 8, qui comporte des bandes d'angle en forme de coin (24) pour couvrir les bords aboutés respectifs entre les plaques de cadre (14, 14') et la plaque de base (13).

10. Plateau de transport (1) selon l'une des revendications 1 à 9, dans lequel la plaque de base (13) dépasse les plaques de cadre (14, 14') dans le plan de la plaque.

11. Plateau de transport (1) selon l'une des revendications 1 à 10, dans lequel le matériau du revêtement (29) est plus résistant à la corrosion que le matériau de la structure de support (2), sur la base de la réaction chimique du même produit.

12. Plateau de transport (1) selon l'une des revendications 1 à 11, dans lequel la structure de support (2) contient un matériau choisi parmi la cordiérite, la mullite, un mélange cordiérite/spinel/mullite, R-SiC, N-SiC, S-SiC, Si-SiC, Si-C lié par oxydation, ou leurs mélanges, et/ou dans lequel le revêtement (29) est plus résistant à la corrosion que le matériau de la structure de support (2), sur la base d'une réaction chimique du même produit, ou leurs mélanges, et/ou dans lequel le revêtement (29) contient au moins 80 % de spinelle d'aluminium/magnésium, d'oxyde d'yttrium ($Y_2O_3$), d'oxyde de cérium ($CeO_2$), d'oxyde d'hafnium, d'oxyde d'aluminium ($Al_2O_3$), d'oxyde de magnésium (MgO), d'oxyde

de zirconium ($ZrO_2$), ou de leurs mélanges.

13. Plateau de transport (1) selon l'une des revendications 1 à 12, dans lequel la plaque de base (13) a un revêtement comprenant au moins 80% de spinelle d'aluminium/magnésium, d'oxyde d'yttrium ($Y_2O_3$), d'oxyde de cérium ($CeO_2$), d'oxyde d'hafnium, d'oxyde d'aluminium ($Al_2O_3$), d'oxyde de magnésium (MgO), d'oxyde de zirconium ($ZrO_2$), ou des mélanges de ceux-ci.

14. Plateau de transport (1) selon l'une des revendications 1 à 13, dans lequel la plaque de base (13) et les plaques de cadre (14, 14') ont un revêtement comprenant au moins 80% de spinelle d'aluminium/-magnésium, d'oxyde d'yttrium ($Y_2O_3$), d'oxyde de cérium ($CeO_2$), d'oxyde de hafnium, d'oxyde d'aluminium (($Al_2O_3$), d'oxyde de magnésium (MgO), d'oxyde de zirconium ($ZrO_2$), ou des mélanges de ceux-ci.

15. Utilisation du plateau de transport (1) selon l'une des revendications 1 à 14 pour produire un matériau de cathode pour une batterie lithium-ion.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024957 A
- EP 0452718 B1
- DE 102011052016 A
- WO 2004111562 A2
- CN 107883774 A
- WO 2012133525 A1
- US 2019218150 A1